# EUROPEAN PATENT SPECIFICATION

(11) **EP 3 485 547 B1**
(45) Date of publication and mention of the grant of the patent: **03.06.2020**
(21) Application number: 16738758.8
(22) Date of filing: 13.07.2016
(51) Int. Cl.: H02G 3/08, H01R 13/52

(54) **LEAD-IN BUSHING AND A MOTOR COMPRISING THE LEAD-IN BUSHING**
ZULEITUNGSBUCHSE UND MOTOR MIT DER ZULEITUNGSBUCHSE
TRAVERSÉE ISOLÉE D'ENTRÉE ET MOTEUR COMPRENANT LA TRAVERSÉE ISOLÉE D'ENTRÉE

(43) Date of publication of application: 22.05.2019
(73) Proprietor: ABB Schweiz AG, 5400 Baden (CH)
(72) Inventor: SIVUNEN, Jarkko, 65320 Vaasa (FI); KALLIOKOSKI, Rami, 65320 Vaasa (FI)
(74) Representative: Kolster Oy Ab
(86) International application number: PCT/EP2016/066578
(87) International publication number: WO 2018/010777

(56) References cited:
- EP-A1- 2 988 374
- DE-A1-102014 100 492
- US-A- 4 729 743
- US-A- 6 071 148
- US-B1- 6 395 985

## Description

### Background of the invention

The present invention relates to a lead-in bushing for explosive atmospheres comprising a bushing having a first end and a second end, an inlet seal having a front end and a back end inside the bushing and a fastening device. The present invention also relates to a motor comprising the lead-in bushing.

The known lead-in bushings for explosive atmospheres are usually formed in such a manner that wires and cables are drawn through the bushing and a resin in a liquid form is injected into the bushing so that the free space inside the bushing is filled with the resin which eventually hardens and become solid.

The drawbacks in the known bushings are that there is an extra work phase to fill the free space with liquid resin. Each lead-in bushing must be checked that the resin is there. In addition to the above-mentioned drawbacks, one cannot disassemble the lead-in bushing without damaging it after the resin is hardened. Further, it is not sure that the free space is filled homogenously, i.e. there can be defects, such as voids, in the filling. Thus, it may be doubtful whether the lead-in bushings pass the strict tests, such as aging or pressure tests. Other relevant prior art is disclosed in DE102014100492 and US6071148.

### Brief description of the invention

The aim of the invention is to solve the problems related to the known lead-in bushings.

There are several benefits related to the invention. First, the lead-in bushing provided with the inlet seal is secure and tight. The assembly of the lead-in bushing requires only one work phase. There is no need for liquid resins either. The lead-in bushings fulfil always the same requirements, i.e. they are uniform and tolerate the same pressure levels. It is possible to disassemble the lead-in bushing or to make modifications to the monitor accessories.

Further, due to the special design of the lead-in bushing, the cables are protected against sharp edges so that their surfaces remain undamaged. The shape of the preformed passages can be formed in such a manner that the cables are easy to assemble. It is also possible to insert pigments of different colors to the material of the inlet seal before it is manufactured. The idea is to have different colors for different cable diameters so that one can easily choose the correct inlet seal.

The lead-in bushing is described in this text so that its central axis is in the vertical direction, i.e. the description is according to the position of the lead-in bushing in the figures below. However, the lead-in bushing as mounted may have a different position.

The lead-in bushing is intended to be used for leading cables from the coil end to the terminal box in electric motors for explosive atmospheres. It is important to seal the connections of the cables in such a manner that the connection is safe in the explosive environment. The lead-in bushing shall tolerate certain pressure and aging requirements. Further, the inlet seal shall perform as a gas-tight seal over a wide temperature range.

The lead-in bushing comprises a bushing having a first end and a second end. The bushing is a hollow shell which usually has a cylindrical form but also other forms are possible.

An inlet seal is a solid which is placed inside the bushing. In other words, the inlet seal is in a solid form when it is put in its place inside the bushing. The outer wall of the inlet seal conforms to the inner wall of the bushing, i.e. the inlet seal is a plug-like component having a front end and a back end inside the bushing. In use the inlet seal presses against the inner wall of the bushing and towards the cables, thus tightening the interface between the inner wall and the seal and the interface between each cable and the seal.

The inlet seal is made of a material which comprises at least one elastomer. An example of a suitable elastomeric material is silicone rubber. The inlet seal is provided with preformed passages for wiring, i.e. the passages are formed when the seal is manufactured e.g. by molding. The passages are open from the front end to the back end. The passages may have enlargements at their both ends in order to make assembling of the cables easier.

The lead-in bushing comprises a metallic inlet collar provided with holes for wiring on the front end of the inlet seal. The inlet collar is integrated into the inlet seal in such a manner that the inlet collar forms the upper surface of the inlet seal.

The lead-in bushing comprises a metallic back collar provided with holes for wiring on the back end of the inlet seal. The back collar is integrated into the inlet seal.

The lead-in bushing comprises a fastening device for closing the first end of the bushing. The fastening device keeps the inlet seal and possible collars inside the bushing. The fastening device is usually a nut.

The lead-in bushing may comprise means for preventing rotation which prevents the inlet collar to wind. Thus, the wires and cables remain straight. The means for preventing rotation may be formed, for example, of counterparts from which one is a protrusion extending outwards from the edge of the inlet collar and the other is a groove in the inner wall of the bushing.

### Brief description of the drawings

The invention is further described by referring to figures in which
Fig. 1a shows an exploded view of a lead-in bushing;
Fig. 1b shows a cut view of a lead-in bushing;
Fig. 1c shows a perspective view of a lead-in bushing;
Fig. 2a shows an exploded view of a lead-in bushing;
Fig. 2b shows a cut view of a lead-in bushing;
Fig. 2c shows a side view of a lead-in bushing;
Fig. 2d shows a perspective view of a lead-in bushing.

### Detailed description of the invention

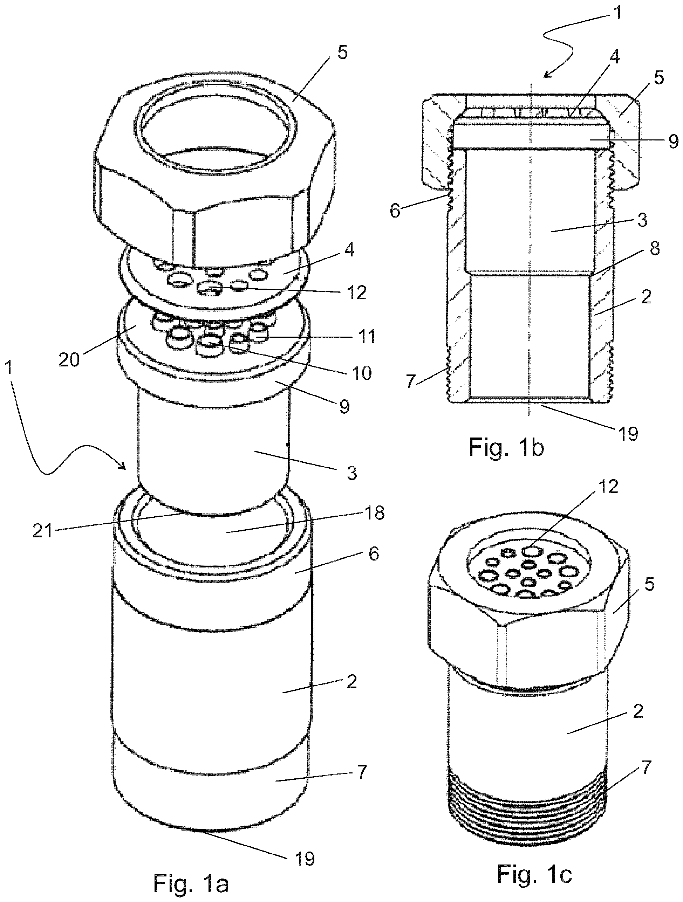

Figs. 1a to 1c show a lead-in bushing according to the invention. Fig. 1a shows parts forming a lead-in bushing 1. The lead-in bushing 1 comprises a bushing 2, an inlet seal 3, an inlet collar 4 and a nut 5 as a fastening device. The bushing 2 may be a hollow cylindrical metallic body which has threads 6, 7 on its outer surface. The inlet seal 3 conforms to the form of the inner wall of the bushing 2. The inner wall of the bushing 2 comprises a shoulder 8 (Fig. 1b) on which the inlet seal 3 rests. The upper part of the inlet seal 3 comprises a flange 9 by which the inlet seal 3 is hanging from the edge of the bushing 2. The inlet seal 3 is made of an elastomeric material by molding. The material may be, for example, silicone rubber. Silicone rubber stands aging and pressure very well. In water pressure tests, levels up to 100 bars have been achieved. The material is serviceable between -60°C and +155°C.

The inlet seal 3 comprises passages 10 which extend vertically through the inlet seal 3 so that cables can be threaded through the passages 10. In the case seen in Figs. 1a and 1c, there are six larger passages 10 for the main connection cables of the stator and eight smaller passages 10 for the monitor accessories. However, the number and the size of the passages 10 may vary. The passages 10 which are not used may be filled with a loop of additional accessory cables for future use if, for example, the monitor accessories require modification. The passages 10 may have on their periphery upwards extending walls 11 which seal the cables, protect the cables against sharp edges and assist in assembling the inlet collar 4. The inlet collar 4 supports the walls 11.

The inlet collar 4 is a disk comprising holes 12 whose size and location corresponds to the size and location of the passages 10. The inlet collar 4 may be made, for example, of metal, plastic or composite. The inlet collar 4 may be integrated to the inlet seal 3 but it can also exist as a separate part. Besides the support to the walls 11 the aim of the inlet collar 4 is to protect the inlet seal against the pressure from the motor.

The lead-in bushing may be tightened by using a nut 5. It is threaded onto the thread 6 on the outer wall of the bushing 2.

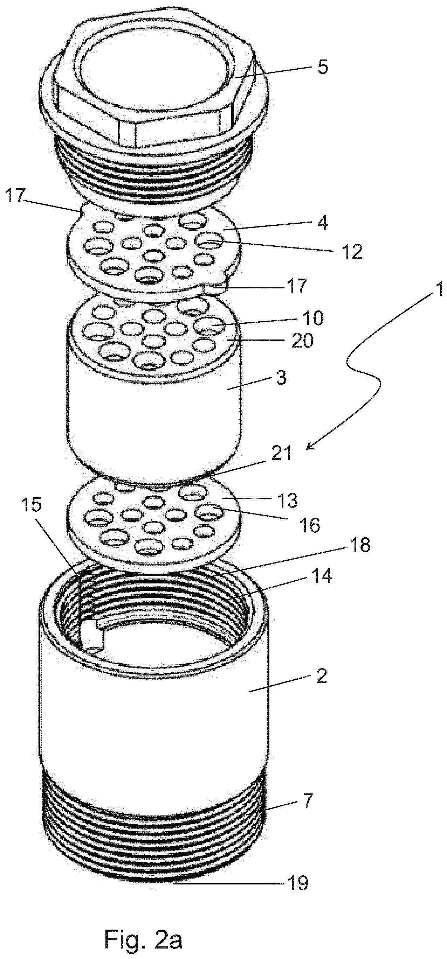

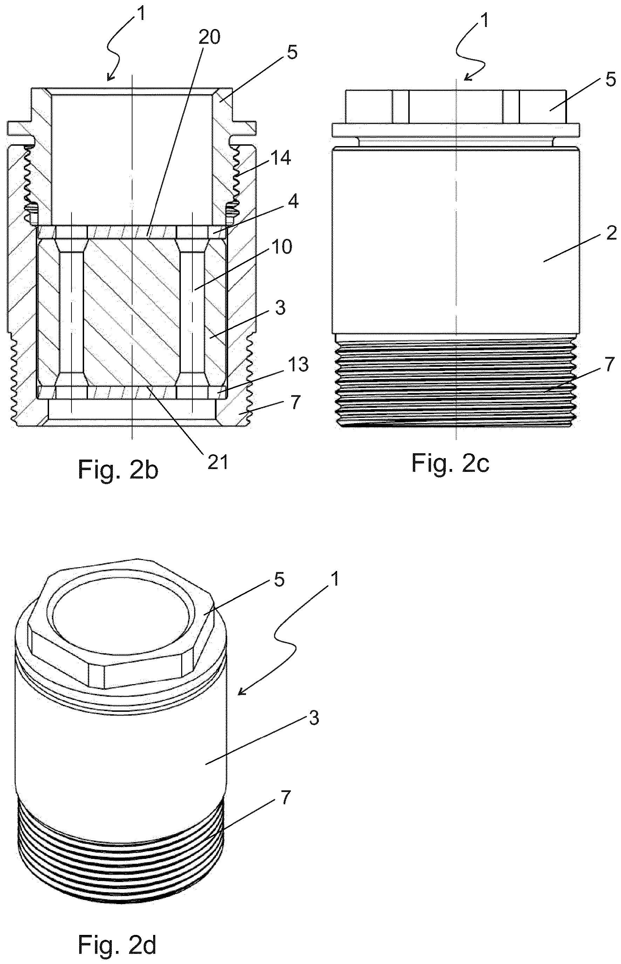

Figs. 2a to 2d show another lead-in bushing according to another embodiment of the invention. Fig. 2a shows an alternative of parts forming a lead-in bushing 1. The lead-in bushing comprises a bushing 2, a back collar 13, an inlet seal 3, an inlet collar 4 and a nut 5 as a fastening device. The bushing 2 may be a hollow cylindrical metallic body which has threads 7 on its outer surface and threads 14 on its inner surface. There may be a substantially vertical groove 15 on the inner surface of the bushing 2. The back collar 13 is a disk comprising holes 16. The back collar 13 may be made, for example, of metal, plastic or composite. The back collar 13 is integrated to the inlet seal 3 but it can also exist as a separate part.

The inlet seal 3 is a cylindrical object having passages 10 which advance from the front end 20 to the back end of the inlet seal 3. The inlet seal 3 is made of an elastomeric material by molding. The material may be the same as in connection with Figs. 1a to 1c.

The inlet collar 4 is a disk comprising holes 12 whose size and location corresponds to the size and location of the passages 10. The inlet collar 4 may be made, for example, of metal, plastic or composite. The inlet collar 4 is integrated to the inlet seal 3 but it can also exist as a separate part.

The inlet collar 4 comprises means for preventing rotation. The means for preventing rotation may comprise two protrusions 17 extending outwards from the edge of the inlet collar 4 and two grooves 15 in the inner wall of the bushing 2. The protrusion 17 fit in the groove 15, thus preventing rotation.

As seen in Fig. 2b, the passages 10 are open from the front end 20 to the back end 21. The passages 10 may have enlargements, i.e. the mouth of the passage 10 may have larger diameter than the regular passage. The mouth of the passage 10 may have cylindrical or funnel-shaped forms which makes the cables easier to assemble.

Figs. 1a to 2d show the bushing 2 and the thread 7on the bushing 2 for fastening the lead-in bushing 1 to the body of the electric motor. However, instead of the thread 7 may be used other fastening means. The bushing 2 may be integrated in the body of the electric motor and thus, the thread 7 is not required.

The above described alternatives are only examples of the invention. The features which are described in connection of Figs. 1a to 1c may be suitable for use in connection of the features which are described in Figs. 2a to 2d, and vice versa. Therefore, the invention may vary in the scope of the claims.

## Claims

1. A lead-in bushing (1) for explosive atmospheres comprising a bushing (2) having a first end (18) and a second end (19); an inlet seal (3) which is a solid provided with preformed passages (10) for receiving cables, the inlet seal (3) comprising at least one elastomer and having a front end (20) and a back end (21) inside the bushing (1); and a fastening device, the lead-in bushing (1) comprises a metallic inlet collar (4) provided with holes (12) for wiring on the front end (20) of the inlet seal (4) and a metallic back collar (13) provided with holes (16) for wiring on the back end (21) of the inlet seal (3), **characterized in that** the inlet collar (4) and the back collar (13) are integrated into the inlet seal (3).

2. The lead in bushing according to claim 1, **characterized in that** the material of the inlet seal (3) is silicone rubber.

3. The lead-in bushing according to claim 1 or 2, **characterized in that** the inlet seal (3) is a cylindrical body.

4. The lead-in bushing according to any preceding claim, **characterized in that** the inlet seal (3) comprises two concentric cylindrical parts one upon the other, the upper part having a flange (9) which has a larger diameter than the lower part.

5. The lead-in bushing according to any preceding claim, **characterized in that** the passages (10) have on their periphery upwards extending walls (11).

6. The lead-in bushing according to any preceding claim, **characterized in that** the mouth of the passage (10) has an enlargement, such as a cylindrical or a funnel-shaped form.

7. The lead-in bushing according to any preceding claim, **characterized in that** the inlet collar (4) supports the walls (11) on the inlet seal (3).

8. The lead-in bushing according to any preceding claim, **characterized in that** it comprises means for preventing rotation.

9. The lead-in bushing according to claim8, **characterized in that** the means for preventing rotation comprises at least one groove (15) in the inner wall of the bushing (2) and at least one protrusion (17), which fits in the groove (15), extending outwards from the edge of the inlet collar 4.

10. An electric motor comprising a lead-in bushing (1) according to any preceding claim.

## Patentansprüche

1. Zuleitungsbuchse (1) für explosive Atmosphären, umfassend eine Buchse (2) mit einem ersten Ende (18) und einem zweiten Ende (19); eine Einlassdichtung (3), die ein mit vorgebildeten Durchgängen (10) zum Aufnehmen von Kabeln versehener fester Körper ist, wobei die Einlassdichtung (3) zumindest ein Elastomer umfasst und ein vorderes Ende (20) und ein hinteres Ende (21) im Inneren der Buchse (1) aufweist; und eine Befestigungsvorrichtung, wobei die Zuleitungsbuchse (1) eine metallische Einlassscheibe (4), versehen mit Löchern (12) für Verkabelung am vorderen Ende (20) der Einlassdichtung (4), und eine metallische hintere Scheibe (13), versehen mit Löchern (16) für Verkabelung am hinteren Ende (21) der Einlassdichtung (3), umfasst, **dadurch gekennzeichnet, dass** die Einlassscheibe (4) und die hintere Scheibe (13) in die Einlassdichtung (3) integriert sind.

2. Zuleitungsbuchse nach Anspruch 1, **dadurch gekennzeichnet, dass** das Material der Einlassdichtung (3) Silikonkautschuk ist.

3. Zuleitungsbuchse nach Anspruch 1 oder 2, **dadurch gekennzeichnet, dass** die Einlassdichtung (3) ein zylindrischer Körper ist.

4. Zuleitungsbuchse nach einem der vorhergehenden Ansprüche, **dadurch gekennzeichnet, dass** die Einlassdichtung (3) zwei, einer über dem anderen liegende, konzentrische zylindrische Teile umfasst, wobei der obere Teil einen Flansch (9) aufweist, der einen größeren Durchmesser als der untere Teil hat.

5. Zuleitungsbuchse nach einem der vorhergehenden Ansprüche, **dadurch gekennzeichnet, dass** die Durchgänge (10) an ihrer Peripherie sich nach oben erstreckende Wände (11) aufweisen.

6. Zuleitungsbuchse nach einem der vorhergehenden Ansprüche, **dadurch gekennzeichnet, dass** die Mündung des Durchgangs (10) eine Vergrößerung aufweist, wie etwa eine zylindrische oder trichterförmige Form.

7. Zuleitungsbuchse nach einem der vorhergehenden Ansprüche, **dadurch gekennzeichnet, dass** die Einlassscheibe (4) die Wände (11) an der Einlassdichtung (3) stützt.

8. Zuleitungsbuchse nach einem der vorhergehenden Ansprüche, **dadurch gekennzeichnet, dass** sie ein Mittel zum Verhindern von Drehung umfasst.

9. Zuleitungsbuchse nach Anspruch 8, **dadurch gekennzeichnet, dass** das Mittel zum Verhindern von Drehung zumindest eine Nut (15) in der Innenwand der Buchse (2) und zumindest einen Vorsprung (17), der in die Nut (15) passt, der sich von der Kante der Einlassscheibe (4) nach außen erstreckt, umfasst.

10. Elektromotor, umfassend eine Zuleitungsbuchse (1) nach einem der vorhergehenden Ansprüche.

## Revendications

1. Traversée d'entrée (1) pour des atmosphères explosives comprenant une traversée (2) ayant une première extrémité (18) et une deuxième extrémité (19) ; un joint d'étanchéité d'entrée (3) qui est un solide pourvu de passages préformés (10) pour recevoir des câbles, ce joint d'étanchéité d'entrée (3) comportant au moins un élastomère et ayant une extrémité avant (20) et une extrémité arrière (21) à l'intérieur de la traversée (1) ; et un dispositif de fixation, la traversée d'entrée (1) comportant un collier métallique d'entrée (4) pourvu de trous (12) pour le câblage sur l'extrémité avant (20) du joint d'étanchéité d'entrée (4) et un collier métallique arrière (13) pourvu de trous (16) pour le câblage sur l'extrémité arrière (21) du joint d'étanchéité d'entrée (3), **caractérisée en ce que** le collier d'entrée (4) et le collier arrière (13) sont intégrés dans le joint d'étanchéité d'entrée (3).

2. Traversée d'entrée selon la revendication 1, **caractérisée en ce que** le matériau du joint d'étanchéité d'entrée (3) est du caoutchouc de silicone.

3. Traversée d'entrée selon la revendication 1 ou 2, **caractérisée en ce que** le joint d'étanchéité d'entrée (3) est un corps cylindrique.

4. Traversée d'entrée selon l'une quelconque des revendications précédentes, **caractérisée en ce que** le joint d'étanchéité d'entrée (3) comporte deux parties cylindriques concentriques l'une sur l'autre, la partie supérieure ayant une bride (9) qui a un diamètre plus grand que la partie inférieure.

5. Traversée d'entrée selon l'une quelconque des revendications précédentes, **caractérisée en ce que** les passages (10) ont sur leur pourtour des parois s'étendant vers le haut (11).

6. Traversée d'entrée selon l'une quelconque des revendications précédentes, **caractérisée en ce que** l'embouchure du passage (10) a un élargissement, tel qu'une forme cylindrique ou une forme en entonnoir.

7. Traversée d'entrée selon l'une quelconque des revendications précédentes, **caractérisée en ce que** le collier d'entrée (4) supporte les parois (11) sur le joint d'étanchéité d'entrée (3).

8. Traversée d'entrée selon l'une quelconque des revendications précédentes, **caractérisée en ce qu'**elle comporte un moyen pour empêcher la rotation.

9. Traversée d'entrée selon la revendication 8, **caractérisée en ce que** le moyen pour empêcher la rotation comporte au moins une gorge (15) dans la paroi interne de la traversée (2) et au moins une saillie (17), qui s'adapte dans la gorge (15), s'étendant vers l'extérieur depuis le bord du collier d'entrée (4).

10. Moteur électrique comprenant une traversée d'entrée (1) selon l'une quelconque des revendications précédentes.
